Europäisches Patentamt

European Patent Office

Office européen des brevets

(11) Publication number: **0 143 916**
**A1**

## (12) EUROPEAN PATENT APPLICATION

(21) Application number: **84110622.2**

(22) Date of filing: **06.09.84**

(51) Int. Cl.⁴: **G 21 C 1/02**

(30) Priority: **08.09.83 JP 167127/83**

(43) Date of publication of application:
**12.06.85 Bulletin 85/24**

(84) Designated Contracting States:
**DE FR**

(71) Applicant: **HITACHI, LTD.**
**6, Kanda Surugadai 4-chome Chiyoda-ku**
**Tokyo 100(JP)**

(71) Applicant: **CENTRAL RESEARCH INSTITUTE OF**
**ELECTRIC POWER INDUSTRY**
**6-1 Ohtemachi 1-chome**
**Chiyoda-ku Tokyo(JP)**

(71) Applicant: **Toshiba Corporation**
**72, Horikawa-cho Saiwai-ku**
**Kawasaki-shi Kanagawa-ken 210(JP)**

(72) Inventor: **Hattori, Sadao**
**97-1, Takaminecho**
**Showa-ku Nagoya(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) Tank type fast breeder reactor.

(57) A tank type fast breeder reactor including a reactor vessel (1), a roof slab (4) secured to the top of the reactor vessel, and a plurality of intermediate heat exchangers (15) and a plurality of circulation pumps (5) located in the reactor vessel on the circumference of an imaginary circle surrounding a core (2) at its center. Each intermediate heat exchanger is quadrilateral in cross-sectional shape and has a relatively small width compared with its length, to reduce the diameter of the reactor vessel.

FIG. 3

## TANK TYPE FAST BREEDER REACTOR

FIELD OF THE INVENTION

This invention relates to a tank type fast breeder reactor.

DESCRIPTION OF THE PRIOR ART

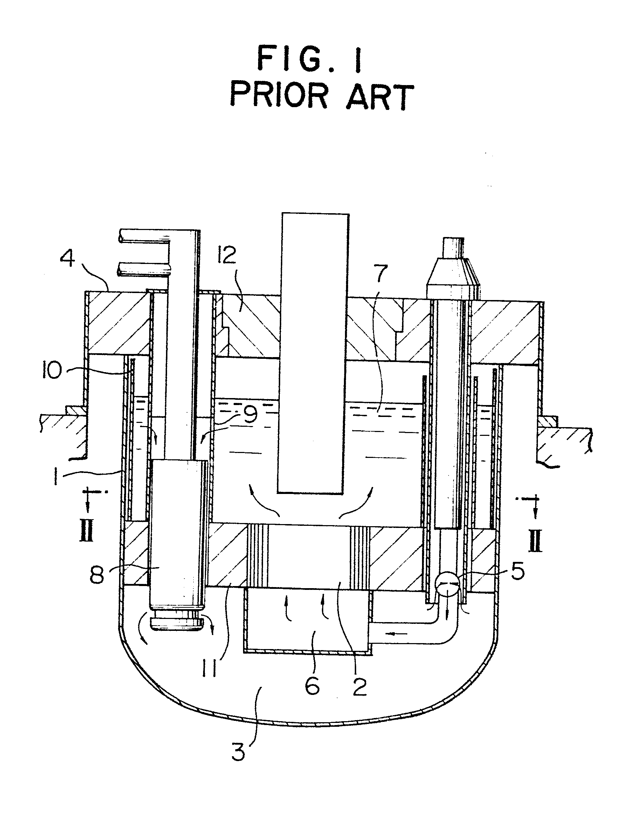

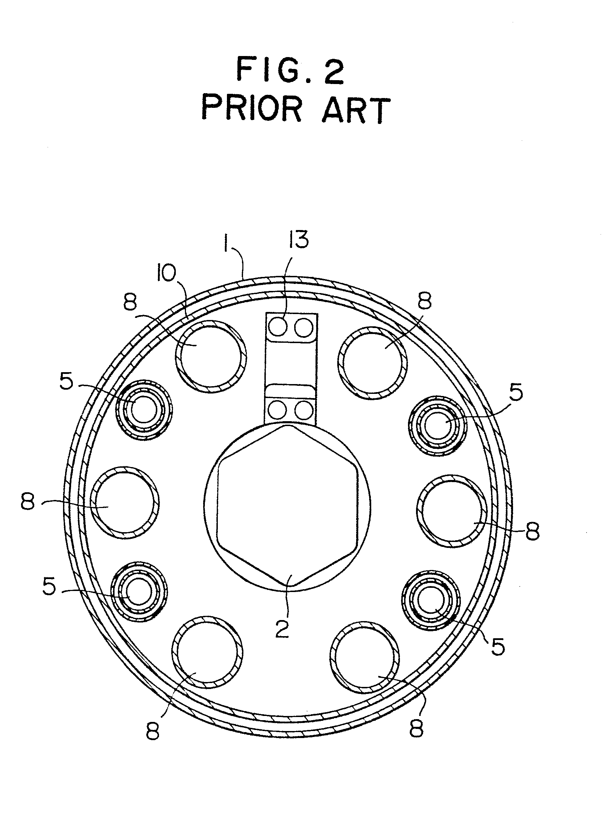

Figs. 1 and 2 show one example of the tank type fast breeder reactor of the prior art in a vertical sectional view and a transverse sectional view through the hot pool, respectively.

The fast breeder reactor comprises a reactor vessel 1 filled with a primary coolant and having a roof slab 4 attached to its top to provide a sealed vessel containing a core 2, a core support structure 11, circulation pumps 5 for forcedly causing the primary coolant (sodium) to flow in circulation, and intermediate heat exchangers 8 allowing heat exchange to take place between the primary coolant and a secondary coolant (sodium).

Sodium of low temperature serving as the primary coolant contained in a cold pool 3 is drawn by suction into the circulation pumps 5 hung from the roof slab 4 and led to a high pressure plenum 6 after having its pressure raised. The sodium of high pressure then flows through the core 2 and becomes high in temperature before reaching a hot pool 7, where it is introduced into the intermediate heat exchangers 8 hung from the roof slab 4 through openings

9 formed at the intermediate heat exchangers 8. In the intermediate heat exchangers 8, the sodium of high temperature gives off heat as it heats the secondary coolant, not shown, of low temperature supplied from steam generators and becomes low in temperature, before returning to the cold pool 3.

Generally, the diameter of the reactor vessel 1 is decided by adding the diameter of the heat exchangers 8 that would satisfy the required amount of heat to be exchanged or the diameter of the circulation pumps 5 that would satisfy the required flow rate and discharge pressure to the core dimensions decided by the generating capacity of the fast breeder reactor and the diameter of a rotating plug 12 for replacing fuels.

The sodium serving as the primary coolant usually operates at the high temperature range between $500^{\circ}$ and $550^{\circ}$C. To ensure that the structure remains sound during its service life and its reliability is improved, a partition wall 10 is provide on the core support structure 11 in the vicinity of a side wall of the reactor vessel 1.

In the tank type fast breeder reactor of the aforesaid construction, it is desired that a compact side will be obtained in a reactor vessel.

OBJECT OF THE INVENTION

This invention has as its object the provision of a tank type fast breeder reactor enabling an overall compact size to be obtained in a tank type fast breeder reactor.

STATEMENT OF THE INVENTION

According to the invention, there is provided a tank type fast breeder reactor comprising a reactor vessel, a roof slab secured to the top of the reactor vessel, a core located in the reactor vessel, and a plurality of intermediate heat exchangers and a plurality of circulation pumps located in the reactor vessel on the circumference of an imaginary circle surrounding a core at its center, wherein each said intermediate heat exchanger is polygonal in cross-sectional shape and has more than four sides.

The intermediate heat exchangers are shaped such that they are extended circumferentially of the reactor vessel to thereby reduce the diameter of the reactor vessel.

BRIEF DESCRIPTION OF THE DRAWINGS

Fig. 1 is a vertical sectional view of one example of the tank type fast breeder reactor of the prior art;

Fig. 2 is a sectional view taken along the line II-II in Fig. 1;

Fig. 3 is a vertical sectional view of the tank type fast breeder reactor comprising one embodiment of the invention;

Fig. 4 is a sectional view taken along the line IV-IV in Fig. 3;

Fig. 5A is a view showing in detail the construction of each of the intermediate heat exchangers shown in Fig. 3;

Fig. 5B is a perspective view of each of the heat exchangers shown in Fig. 3; and

Figs. 6A and 6B are model showing horizontal sectional areas of the intermediate heat exchangers shown in Figs. 2 and 4 respectively.

DESCRIPTION OF THE PREFERRED EMBODIMENT

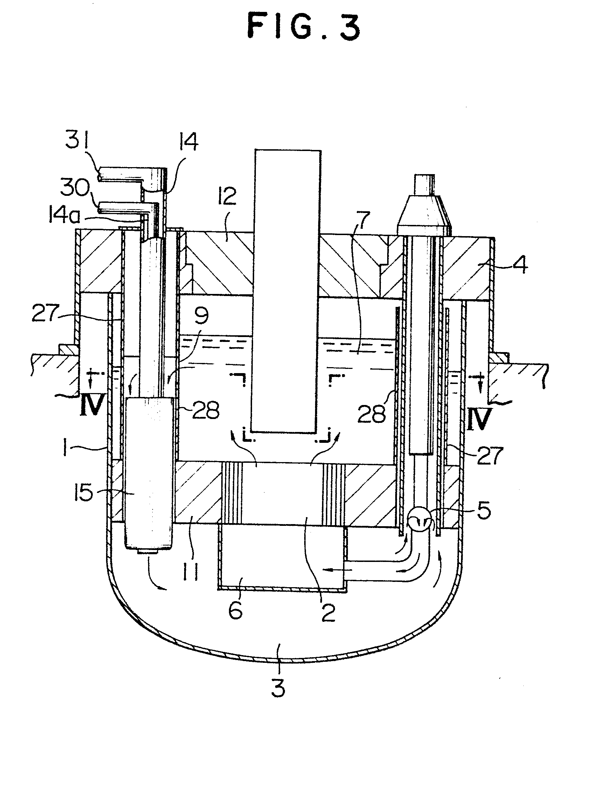

One embodiment of the invention is shown in Figs. 3, 4, 5A and 5B.

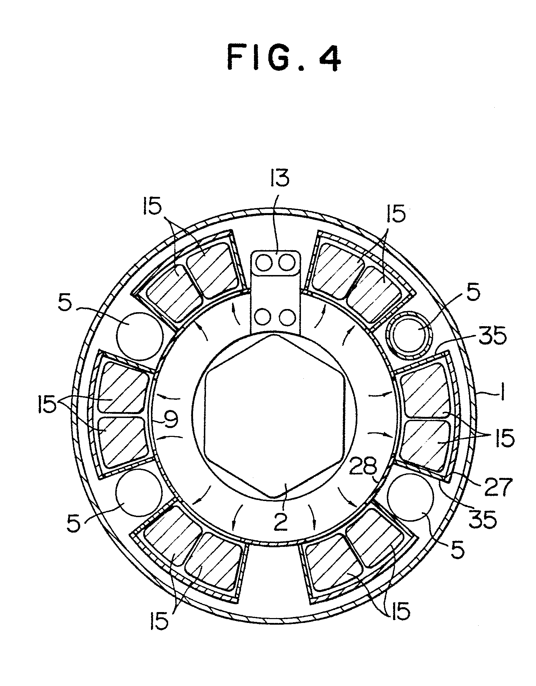

In this embodiment, intermediate heat exchangers 15 which are quadrilateral in shape in transverse cross section as shown in Fig. 4 are arranged around the core 2 alternately with the cirulation pumps 5, so as to make best use of the space around the intermediate heat exchangers that has hitherto been neglected. The invention makes it possible to reduce the diameter of the intermediate heat exchangers which is a governing factor in deciding the diameter of a reactor vessel.

The intermediate heat exchangers 15 each have a width oriented radially of the reactor vessel 1 which is substantially equal to the diameter of the circulation pumps 5. Each intermediate heat exchanger 15 is located in a region defined by an arcuate plate 27, radially oriented plates 35 and a cylinder 28 mounted in the reactor vessel 1, and all the intermediate heat exchangers 15 are arranged such that they do not interfere with the arrangement of the circulation pumps 5 and a fuel exchanging chute 13. The circulation pumps 5 are also located outside the cylinder 28. The provision of the arcuate plates 27 and radially oriented plates 35 secured to the core support structure 11 has the effect of avoiding the liquid sodium of high temperature released from the core 2 coming into contact with the reactor vessel 1. The cylinder 28 secured to the core support sturucture 11 is formed with openings 9 for introducing the sodium into the intermediate heat exchangers 15. The liquid sodium of high temperature flows from the hot pool 7 through the openings 9 into the intermediate heat exchangers 15, and the liquid sodium that has become low in temperature after heat exchange has taken place in the intermediate heat exchangers 15 flows out of the intermediate heat exchangers 15 into the cold pool 3.

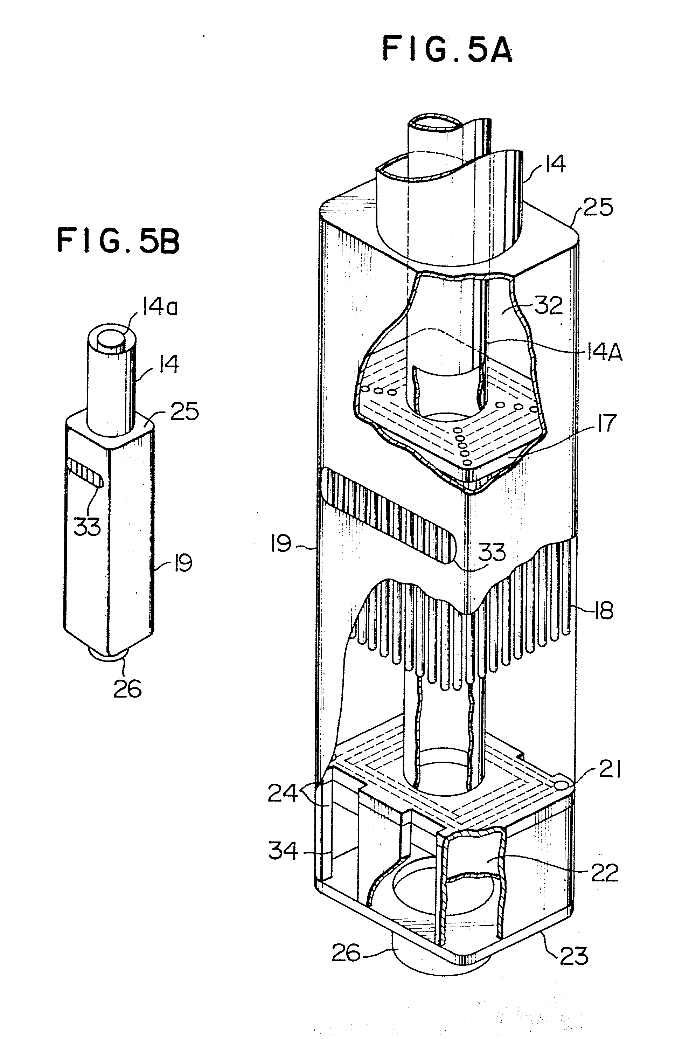

Figs. 5A and 5B show one of the intermediate heat exchangers 15. The intermediate heat exchanger 15 includes a cylinder 14 and a line 14a having an outlet port 30 and an inlet port 31 of the secondary coolant (sodium) and is secured to the roof slab 4 by the cylinder 14. The cylinder 14 is secured to an upper support plate 25 of a quadrilateral shape which also has an upper end of an outer cylinder 19 secured thereto. An upper tube plate 17 of a quadrilateral shape is secured to an inner surface of the outer cylinder 19 in a position below the upper support plate 25. An upper header chamber 32 for collecting the secondary coolant (sodium) that has become high in temperature due to heat exchange with the primary coolant (sodium) is formed to provide a space defined by the outer cylinder 19, upper support plate 25 and upper tube plate 17. A multiplicity of heat transfer tubes 18 connected to the upper tube plate 17 in such a manner that their upper ends open in the upper head chamber 32 constitute a tube bundle of a quadrilateral shape matching the upper tube plate 17. The tube bundle is enclosed by the outer cylinder 19 as if it were a square post having a quadrilateral cross-section. The heat transfer tubes 18 are connected at their lower ends to a lower tube plate 21 of a quadrilateral shape which is connected to a distribution box 22 in a manner to close its upper end. The heat transfer tubes 18 and the line 14a are maintained at their lower ends in communication with a hollow space in the box 22. The lower tube plate 21 and distribution box 22 are secured to an inner surface of the outer sylinder 19. The lower tube plate 21 and distribution box 22 are formed at their lateral sides with grooves 24 serving as passages for the primary coolant (sodium). A lower support plate 23 supporting an outlet tube 26 of the primary coolant (sodium) is arranged to define a space 34 below the distribution box 22 and connected to a lower end of the outer cylinder 19. The lower tube plate 21 and distribution box 22 are enclosed at their lateral sides by the outer cylinder 19. To reduce thermal stresses produced in the intermediate heat exchangers 15, it is necessary that the secondary coolant (sodium) be caused to flow uniformly through the multiplicity of heat transfer tubes 18. To this end, flow regulating orifices are formed at the upper tube plate 17 and lower tube plate 21 to equalize a flow resistance through the secondary coolant (sodium) inlet line 14a inside the cylinder 14 to its outlet to the upper tube plate 17.

The coolant (sodium) of high temperature released from the reactor core 2 flows via the openings 9 located in the cylinder 28 and apertures 33 formed in the outer cylinders 19 of the intermediate heat exchangers 15 into the outer cylinders 19. In each intermediate heat exchanger 15, the coolant flows through the outer cylinder 19 along outer surfaces of the heat transfer tubes 18 and through the grooves 24 to the space 34 between the distribution box 22 and lower support plate 23, from which it is led via the outlet line 26 to the cold pool 3. Meanwhile, the secondary coolant (sodium) of low temperature released from the steam generators, not shown, flows via the secondary coolant (sodium) inlet line 14a into the distribution box 22, from which it is distributed to the heat transfer tubes 18. The secondary coolant (sodium) flowing through the heat transfer tubes 18 from their lower ends to their upper ends is heated by the primary coolant (sodium) of high temperature flowing along the outer surfaces of the heat transfer tubes 18. The secondary coolant (sodium) thus heated by the heat exchange is released into the upper header chamber 32 defined between the upper support plate 25, upper tube plate 17 and outer cylinder 19, from which it flows through an annular passage between the cylinder 14 and secondary coolant inlet line 14a before return to the seteam generators.

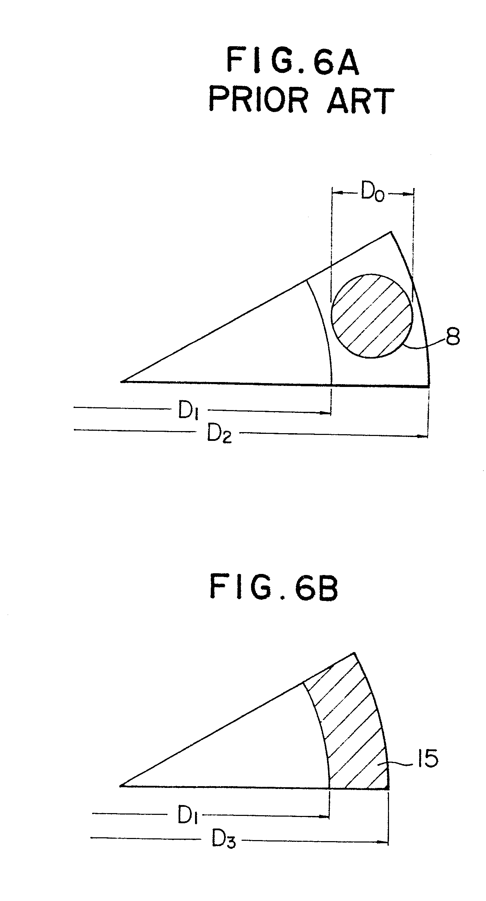

Fig. 6A shows a cross section of the intermediate heat exchanger 8 of a circular cross-sectional shape, and Fig. 6B shows a cross section of the intermediate heat exchanger 15 of a quadrilateral shape. Let the diameter of the rotating plug 12 and the diameter of the intermediate heat exchanger 8 be denoted by $D_1$ and $D_0$ respectively. Then, the diameter $D_2$ of the reactor vessel of a tank type fast breeder reactor of the prior art can be expressed by the following equation:

$$D_2 = D_1 + 2 \cdot D_0$$

Meanwhile, in the case of the intermediate heat exchanger 15, one only has to make the intermediate heat exchangers 8 and 15 equal in cross-sectional area to each other if it is desired to obtain the same amount of heat exchanged under the condition that the heat exchangers 8 and 15 are equal in height to each other. Thus, the diameter $D_3$ of the reactor vessel in the embodiment of the invention can be decided as follows.

The total of the cross-sectional areas of six (6) intermediate heat exchangers 8 of the prior art can be expressed as follows:

$$6 \times (\frac{D_0}{2})^2 \cdot \pi = 6 \times \frac{\pi}{4} D_0^2 \qquad \ldots \ldots \ldots (1)$$

The total of the corss-sectional areas of six (6) intermediate heat exchangers 15 of the present embodiment can be expressed as follows, when the proportion of the area occupied by the intermediate heat exchangers 15 peripherally of the reactor vessel is assumed to be about 2/3:

$$\frac{2}{3} \cdot [\,(\frac{D_3}{2})^2 \cdot \pi - (\frac{D_1}{2})^2 \cdot \pi\,] = \frac{2}{3} \cdot \frac{\pi}{4}(D_3^{\,2} - D_1^{\,2}) \qquad \ldots\ldots\ldots(2)$$

The necessary cross-sectional areas of the intermediate heat exchangers 8 and 15 are equal to each other so that equations (1) and (2) are equal to each other when the amount of heat necessary to be exchanged is equivalent. Therefore, the diameter $D_3$ of the reactor vessel can be obtained from the following equation, based on equations (1) and (2):

$$D_3 = \sqrt{9D_0^{\,2} + D_1^{\,2}}$$

Results of studies conducted on the extent to which the diameter of the reactor vessel 1 can be reduced are as follows.

When the diameter $D_1$ of the rotating plug 12 is 16 m and the diameter $D_0$ of the intermediate heat exchangers is 2 m, the diameter $D_2$ of the reactor vessel of a fast breeder reactor of the tank type of the prior art is as follows:

$$D_2 = 16 + 2 \times 2 = 20 \text{ m}$$

- 10 -

0143916

In the present embodiment, however, the diameter $D_3$ of the reactor vessel 1 is as follows:

$$D_3 = \sqrt{9 \times 2^2 + 16^2} = 17.1 \text{ m}$$

It will be seen that the diameter $D_3$ of the reactor vessel can be reduced to 87% of the diameter $D_2$ of the reactor vessel of the prior art.

The effects achieved by the present invention are as follows:

1)   The metarial used for building a reactor vessel and hence a building for housing same can be reduced;

2)   The space for installing a reactor vessel and a building for housing same can be reduced.

From the foregoing description, it will be appreciated that the invention makes it possible to obtain a compact size in a reactor vessel and hence an overall compact size in a tank type fast breeder reactor.

WHAT IS CLAIMED IS:

1. A tank type fast breeder reactor comparising:

a reactor vessel (1);

a roof slab (4) secured to the top of the reactor vessel; and

a plurality of intermediate heat exchangers (15) and a plurality of circulation pumps (5) located in the reactor vessel on the circumference of an imaginary circle surrounding a core (2) at its center;

wherein each said intermediate heat exchanger is polygonal in cross-sectional shape and has more than four sides.

2. A tank type fast breeder reactor as claimed in claim 1, wherein each said intermediate heat exchanger (15) is quadrilateral in cross-sectional shape, and each said intermediate heat exchanger has a width substantially equal to the diameter of each said circulation pump (5).

3. A tank type fast breeder reactor as claimed in claim 2, wherein each said intermediate heat exchanger (15) is located in a region defined by an arcuate plate (27), radially oriented plates (35) and a cylinder (28) mounted in the reactor vessel.

# FIG. I
## PRIOR ART

0143916

# FIG. 2
# PRIOR ART

# FIG. 3

0143916

# FIG. 4

# FIG.5A

# FIG.5B

# FIG.6A
# PRIOR ART

$D_0$

$D_1$

$D_2$

8

# FIG.6B

$D_1$

$D_3$

15

**European Patent Office**

**EUROPEAN SEARCH REPORT**

## DOCUMENTS CONSIDERED TO BE RELEVANT

| Category | Citation of document with indication. where appropriate, of relevant passages | Relevant to claim | CLASSIFICATION OF THE APPLICATION (Int. Cl 4) |
|---|---|---|---|
| X | EP-A-0 048 672  (NOVATOME) <br> * page 5,  lines 25-38; page 6, lines 1-5;  figures 1-3; page 8, lines 5-11 * | 1,2,3 | G 21 C     1/02 |
| | --- | | |
| X | FR-A-2 096 841  (BABCOCK) <br> * page 4,  lines 9-22; figures 3,4,5 * | 1,2,3 | |
| | --- | | |
| A | FR-A-1 466 741  (E.E.C.) <br> * page 3, right-hand column, last paragraph; figures 1-5 * | 1,2 | |
| | ----- | | |

**TECHNICAL FIELDS SEARCHED (Int. Cl.4)**

G 21 C     1/00
F 22 B     1/00

The present search report has been drawn up for all claims

| Place of search | Date of completion of the search | Examiner |
|---|---|---|
| THE HAGUE | 10-12-1984 | KAVCIC D. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503 03 82